(19) Europäisches Patentamt
European Patent Office
Office européen des brevets

(11) **EP 3 070 071 A1**

(12) **EUROPEAN PATENT APPLICATION**

(43) Date of publication:
21.09.2016 Bulletin 2016/38

(51) Int Cl.:
*C04B 35/628* (2006.01)   *C04B 14/02* (2006.01)
*C04B 14/20* (2006.01)   *C04B 35/80* (2006.01)
*C09C 1/40* (2006.01)   *C08K 9/02* (2006.01)

(21) Application number: 15159247.4

(22) Date of filing: **16.03.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Construction Research & Technology
GmbH**
**83308 Trostberg (DE)**

(72) Inventors:
 • **Albrecht, Gerhard**
  **83209 Prien a. Ch. (DE)**
 • **Nicoleau, Luc**
  **83352 Altenmarkt an der Alz (DE)**

 • **Feichtenschlager, Bernhard**
  **83278 Traunstein (DE)**
 • **Carnelli, Davide**
  **8093 Zürich (CH)**
 • **Libanori, Rafael**
  **8093 Zürich (CH)**
 • **Studart, Andre**
  **8093 Zürich (CH)**
 • **Rothfuchs, Nuria**
  **8093 Zürich (CH)**
 • **Zanini, Michele**
  **8093 Zürich (CH)**

(74) Representative: **Reitstötter Kinzebach
Patentanwälte
Sternwartstrasse 4
81679 München (DE)**

(54) **A PROCESS FOR FORMING ROUGHENED MICRON SIZE ANISOTROPIC PLATELETS**

(57) The present invention relates to a process for forming roughened micron-size anisotropic platelets which are useful as reinforcements in structural materials and to roughened platelets which are obtainable by the process of the invention. The structural materials reinforced with the roughened micron-size anisotropic platelets of the invention exhibit improved mechanical properties.

**Description**

TECHNICAL FIELD

The invention relates to a process for forming roughened micron-size anisotropic particles in the form of platelets which are useful as reinforcement in structural materials and to roughened particles in the form of platelets which are obtainable by the process of the invention.

The stress transfer between a matrix and reinforcing elements is a general problem in structural composites. For example, in cementitious composites the modification of the surface topography to improve the interfacial interaction between matrix and reinforcing elements for an inorganic, micron-size reinforcement still is a challenging scientific and technological task.

Lin et al., Journal of Colloid and Interface Science 344 (2010) 272-278, disclose a novel electrophoretic deposition technology for assembling surface-roughened inorganic nanoplatelets into ordered multilayer. A thin layer of sol-gel silica is coated via the Stoeber method (Langmuir 19, 6693-6700, 2003) on smooth gibbsite nanoplatelets in order to increase the surface roughness to mimic the asperity of aragonite platelets found in nacre.

Hashimoto et al., J. Am. Ceram. Soc. 86, 11, 1959-1961, 2003, disclose the formation of spinel platelets from a powder mixture of $\alpha$-$Al_2O_3$ and magnesium sulfate by heating for 2 hours at 1200 °C. The surface of the obtained platelets was rough and the authors expected potential benefits in platelet-reinforced composites without having shown any benefit.

Munch et al., Science 232, 2008, 1516-1520, disclose combining of aluminum oxide and polymethyl methacrylate into ice-templated structures to produce a hybrid ceramic-based material with high yield strength and fracture toughness. When sucrose is added as an additive to the freeze-casting slurry, the growing ice crystals develop a microscopic roughness in the ceramic walls.

Bouville et al., Nature Materials, 2014, 13, 508-514, disclose an ice-templated process to build bioinspired ceramics from alumina platelets, alumina nanoparticles and a silica-calcia liquid phase. Microstructural investigations revealed the presence of inorganic bridges and nano-asperities along with a glassy phase filling the space between adjacent platelets. Shukla et al., Proceedings on the World Congress of Engineering 2011, Vol III, July 6 - 8, 2011, London, U.K., disclose the use of alumina platelets functionalized with 3-glycidoxypropyltrimethoxysilane to reinforce epoxy resins. The non-functionalized alumina platelets improve storage modulus and glass transition temperature whereas the functionalized alumina platelets improve storage modulus and glass transition temperature only moderately.

Xia et al., ACS Nano (published online Jan. 27 2015, DOI: 10.1021/acsnano.5b00119) disclose the preparation of surface roughened silica platelets with aragonite-like nanoasperities through biomineralization using silicic acid and the diblock copolymer $PEG_{114}$-$PLL_{68}$ as template. In this way nanograins were firmly bound to the surface of the platelets.

WO 2011/120643 discloses a method for the production of reinforced material by adsorption of magnetic and/or superparamagnetic nanoparticles to the surface of reinforcing particles through van der Waals, electrostatic interactions and/or covalent bonds. The particles are added into a matrix and magnetically aligned to give the reinforced material.

WO 2014/040704 discloses a reinforced composite material based on a polymer matrix with reinforcing particles embedded therein, wherein the reinforcement particles comprise inorganic nanoplatelets and inorganic micro-platelets which had been surface-modified by chemically bonding, for example, 3-aminopropyltriethoxysilane.

WO 2013/011256 A1 discloses the preparation of a nanocomposite material by impregnating a carbon fiber fabric with an aqueous solution containing nano-silica particles and then drying impregnated fabric to reinforce fiber fabrics.

WO 2012/049198 A1 discloses the production of a fibrous support material coated with nanocellulose after contacting the support material with an aqueous dispersion of nanocellulose. US 2011/0028308 A1 discloses embedding nanoparticles on the surface of the glass fiber core while the molten glass fiber core is at or above its softening temperature, for forming a nanoparticle-laden glass fiber. US 2008/0305329 A1, US 2008/0160286 A1, and EP 1 939 149 A2 basically disclose the reinforcement of fibers with small particles having an average dimension of approximately 0.01 nm to approximately 30 $\mu$m physically and/or chemically bonded directly to their surfaces to form protuberances. Such particles are provided from an alkaline aqueous size composition containing the nanoparticles dispersed therein, as described in the patents. The particles, directly bonded to the surfaces of the fibers, serve to enhance physical properties of composite articles which incorporate such fibers as reinforcement. WO 2008/034042 A2 relates to micron size powders having nano size reinforcements. This approach consists in effectively dispersing nano size discontinuous reinforcements throughout a micron size titanium or titanium alloy powder. US 2007/0298172 A1, US 2007/0269605 A1, and WO 2007/015880 A2 describe a method for strengthening the bond between an alumino-silicate substrate and mortar/cement which involves the chemical reaction of a rough glazed contact surface with mortar/cement to form an intermediate bond layer which bonds the substrate to mortar/cement.

SUMMARY OF THE INVENTION

The problem underlying the invention was to provide a simple process for preparing a reinforcing building block for structural materials on the basis of micron-sized platelets having a roughened surface to provide a geometrical interlocking mechanism with the continuous matrix. The process should be such to allow deliberate control of size and density of the asperities in order to optimize the stress transfer between the matrix and the modified reinforcing particles.

Surprisingly, it has now been found that such roughened reinforcing building blocks can be easily obtained by a process where pre-formed nanoparticles of well-defined size and chemical composition are attached to the surface of micron size particles by electrostatic attraction or chemisorption followed by promotion of a strong adhesion through sintering or melting.

The present invention therefore relates to a process for forming roughened micron size anisotropic particles in the form of platelets which comprises

a1) contacting micron size inorganic oxide platelets with inorganic nanoparticles other than magnetic and/or superparamagnetic nanoparticles or with organic polymeric nanoparticles, which inorganic or organic nanoparticles have a melting or sintering temperature lower than the sintering temperature of the micron size platelets, in aqueous suspension at a pH that is between the isoelectric point of the nanoparticles and the isoelectric point of the micron size platelets to obtain modified micron size inorganic oxide platelets having nanoparticles adsorbed on the surface due to electrostatic attraction or

a2) adsorbing organic polymeric nanoparticles on said inorganic micron size platelets by chemisorption to obtain modified micron size platelets having organic nanoparticles attached to the surface due to chemisorption;

b) optionally, isolating the obtained modified micron-size platelets; and

c) optionally, heating the isolated modified platelets to sinter the nanoparticles on the surface of the micron-size platelets.

BRIEF DESCRIPTION OF THE DRAWINGS

Fig. 1a    shows roughened alumina platelets modified with 100 nm silica spheres at a nominal surface coverage of 1% after electrostatic adsorption before sintering.

Fig. 1b    shows roughened alumina platelets modified with 250 nm silica spheres at a nominal surface coverage of 10% after electrostatic adsorption before sintering.

Fig. 1c    shows roughened alumina platelets modified with 100 nm silica spheres at a nominal surface coverage of 1% after electrostatic adsorption after sintering.

Fig. 1d    shows roughened alumina platelets modified with 250 nm silica spheres at a nominal surface coverage of 10% after electrostatic adsorption after sintering. The side view shows the amplitude of the sintered silica particles compared to the thickness of a bare alumina platelet with a thickness of about 200 nm.

Fig. 2    shows the flexural modulus of cementitious composites obtained from the bending tests at 7 days after mixing as a function of the open porosity of the samples.

Fig. 3    shows the flexural strength of cementitious composites obtained from the bending tests at 7 days after mixing as a function of the open porosity of the samples.

Fig. 4    shows absolute values of the Young modulus and compressive strength for the tested composites.

Fig. 5    shows the $K_{IC}$ (value related to the energy required to initiate a crack in a material which does not exhibit an extended ductile behavior) in the tested cementitious composites.

Fig. 6    shows normalized data of the flexural modulus of the tested composites.

Fig. 7       shows normalized data of the flexural strength of the tested composites.

Fig. 8a      shows representative stress-strain curves for epoxy and composites reinforced with 15 vol% of bare and roughened platelets.

Fig 8b       shows the flexural strength for the epoxy and the reinforced composites.

Fig 8c       shows the work of fracture for the epoxy and the reinforced composites.

Fig 8d       shows the fracture toughness for the epoxy and the reinforced composites.

DETAILED DESCRIPTION OF THE INVENTION

The micron size inorganic oxide platelets (in the following "microparticles")

These particles are inorganic, anisotropic microplatelets and form the basis for the attachment of the nanoparticles. Preferably, the particles are selected from alumina platelets, silica platelets, zirconium dioxide platelets, gibbsite platelets, clay platelets, talc platelets, mica platelets, glass platelets, silicon carbide platelets, or aluminum boride platelets. Alumina platelets are preferred.

According to an embodiment, the micron-size particles are platelets having a thickness in the range from about 1 nm to about 10 $\mu$m, preferably about 10 nm to about 5 $\mu$m. According to a further embodiment, the platelets have an average (in plane) diameter in the range from about 1 $\mu$m to about 100 $\mu$m, preferably about 10 $\mu$m to about 80 $\mu$m. According to a further embodiment, the platelets have an aspect ratio in the range from about 5 to about 100, preferably from about 10 to 80.

The micron-size particles are commercially available and/or can be prepared in a conventional manner, for example as disclosed in Hashimoto et al., J. Mater. Res. 14, 12, 4667-4672, 1999.

The nanoparticles

The nanoparticles may be inorganic oxide particles that are preferably selected from aluminum oxide, silicon dioxide, titanium dioxide, and zirconium dioxide. The nanoparticles may also be polymeric organic particles such as those on the basis of polystyrene, polyurethanes, polyolefins such as polyethylene, or polypropylene, poly(meth)acrylic acid, copolymers of (meth)acrylic acid or vinyl sulfonic acid with (meth)acrylic acid esters, styrene, or olefins or polyvinylpyrrolidone. In order to achieve attachment to the microparticles by chemisorption, the polymeric organic particles are provided with functional groups such as carboxylic acid groups, sulfonic acid groups, hydroxyl groups, and /or amino groups. Likewise, the microparticles are provided with corresponding functional groups (for example, carboxylic acid groups, sulfonic acid groups, hydroxyl groups, and /or amino groups) that are able to react with the functional groups of the nanoparticles. For this purpose the microparticles may be provided with an interlayer, such as a silica layer produced by a modified sol gel method, which is suitable to react with the functional groups of the nanoparticles or with a linker having functional groups capable to react with the functional groups of the nanoparticles. The modified sol gel method is disclosed in Langmuir, 19(17):6693-6700, 2003 and Composite Science and Technology, 72(3):435-445, 2012.

The nanoparticles are commercially available and/or can be prepared in a conventional manner, for example as disclosed in W. Stöber et al., J. Colloid Interface Sci. 26, 1, 62-69, 1968 for inorganic nanoparticles and in C. Reese et al., J. Colloid Interface Sci., 248, 1, 41-46, 2002 for polymeric nanoparticles.

Especially preferred nanoparticles are silicon dioxide or polystyrene particles functionalized with carboxylic acid groups. The functionalized polystyrene particles are commercially available (LUDOX®, Sigma-Aldrich) or can be prepared as disclosed in C. Reese et al., J. Colloid Interface Sci., 248, 1, 41-46, 2002. Especially preferred are aluminum oxide platelets that are provided with a silica interlayer. As a linker to achieve an attachment the interlayer to the functionalized polystyrene nanoparticles 3-aminopropyltriethoxysilane is preferably used. The ethoxy groups thereof form bonds with the silica and the amino groups are coupled to the carboxylic acid groups of the polystyrene by forming an amide bond in a conventional manner.

The inorganic nanoparticles have a sintering temperature lower than the sintering temperature of the microparticles whereas the organic polymeric particles have a melting temperature lower than the sintering temperature of the microparticles.

In general the nanoparticles are spherical having a diameter in the range from about 5 nm to about 1 $\mu$m, preferably from about 10 nm to about 600 nm.

Preparation of the roughened micron size anisotropic particles in the form of platelets

The nanoparticles are attached to the surface of the micron size particles to achieve surface roughness. According to one embodiment, the nanoparticles are attached electrostatically. This can be done by immersing the nanoparticles and the micron size particles in a fluid, in particular water, under conditions such that the nanoparticles and the micron size particles are oppositely charged. Preferably, the opposite charge is generated by adapting the pH of the aqueous suspension containing the nanoparticles and the micron size particles to a value between the isoelectric point of the nanoparticles and the isoelectric point of the micron size particles. To allow adsorption of the nanoparticles on the surface of the microparticles the suspension is allowed to stand or stir for at least 2 hours.

In case the nanoparticles are polymeric organic nanoparticles, adsorption to the micron size platelets may be achieved by chemisorption. For this purpose the micron-size platelets are first coated with an amphiphilic nonionic polymer, such as polyvinylpyrrolidone (PVP), as described by Libanori et al. in Composite Science and Technology, 72(3):435-445, 2012. PVP having in general a molecular weight of 100.000 to 500.00 is used. The coating is suitable to stabilize the platelets and to provide a higher affinity to the next coating layer which is preferably a layer of an inorganic oxide prepared by the sol-gel-process. Preferably a layer of a silicon dioxide coating is used. It is applied by treating the polymer coated platelets with a tetraalkyl-orthosilicate, such as tetramethyl-orthosilicate or tetraethylorthosilicate, in an alkanol having 1 to 4 carbon atoms in the presence of ammonia or an amine.

In the next step a linker is attached to the silica coating by treating the silica coated platelets with 3-aminopropyltriethoxysilane (APTES). The ethoxy groups of APTES form a bond to the silica layer. The free amino group of APTES can then be used to attach the polymeric organic nanoparticles to the platelets by reacting the amino group with a suitable functional group of the nanoparticles such as a carboxylic acid group or sulfonic acid group according to known methods, for example in the presence of dicyclohexylcarbodiimide and dimethylaminopyridine.

After the nanoparticles are attached on the surface of the microparticles to give modified microparticles with a roughened surface the modified microparticles are optionally isolated, in particular by filtering, and dried.

In an optional step the microparticles modified with inorganic nanoparticles are subjected to a heat treatment step to achieve sintering of the nanoparticles and thereby enhance the attachment of the nanoparticles to the surface of the microparticles. To effectively achieve the heat treatment the nanoparticles and the microparticles are selected such that the sintering temperature of the nanoparticles is below that one of the microparticles. This allows carrying out the heat treatment at a temperature where the nanoparticles are sintered or annealed whereas the microparticles remain unaffected.

In case of inorganic nanoparticles the temperature for the heat treatment is in general in the range from about 300 °C to about 1400 °C. The duration of the heat treatment depends on the size and the nature of the nanoparticles. According to an embodiment, the modified microparticles roughened with silica are first heated to a temperature in the range from 350 to 450 °C. The heating rate is preferably in the range from about 1 to 3 °C/min in the first heating step. Thereafter, the modified microparticles are heated to a temperature in the range from 1000 to 1300 °C and kept at this temperature for about 2 to 8 hours. In the second heating step the temperature is selected in accordance with the particle size of the nanoparticles. For particles having a diameter in the range from about 5 nm to about 200 nm, a temperature in the range from about 1000 °C to 1150 °C is selected whereas for particles having a diameter in the range from about 200 nm to about 1 $\mu$m, a temperature in the range from about 1150 °C to 1300 °C is selected.

In case of polymeric organic nanoparticles, heat treatment is carried out at a temperature in the range from about 100 °C to 200 °C.

In case agglomerates are formed upon heat treatment, they can be ground or otherwise broken up.

In general, the amount of nanoparticles loaded on the microparticles is 1 to 10 % by weight, based on the weight of the microparticles.

The roughened anisotropic microparticles can additionally be provided with magnetic or superparamagnetic particles such as magnetite to give magnetized roughened microparticles. The process for preparing them can be carried out as described in WO 2011/120643 or Science 335 (2012) 199-204.

The process of the invention has the advantage that it is simple and versatile and allows deliberate control of size and density of the asperities. Thus, the process is suitable to provide roughened microparticles in any desired design, i.e. they can be specifically tailored to the needs as required by their field of use and application in different matrix systems.

Roughened anisotropic microparticles and composites containing them

The present invention further relates to roughened anisotropic microparticles which are obtainable according to the process of the invention. Further, the invention relates to reinforced composite materials comprising the roughened microparticles and to the use of the roughened microparticles as reinforcement in structural materials such as cement, ceramic, metal or polymer.

The microparticles have an artificially created roughened surface built by the nanoparticles in the form of islands or asperities on the flat surface of the microparticles. The roughened anisotropic microparticles are useful as reinforcement in structural materials such as cement, ceramic, metal or and polymers. It is hypothesized that the roughened microparticles promote geometric interlocking between the microparticles and the structural materials matrix which results in an improvement of the mechanical properties of a composite containing the microparticles. In particular strength and toughness of the composite are increased so that crack initiation and propagation in the composite are reduced.

The composite materials which can be reinforced with the roughened microparticles are in particular cement such as all kinds of Portland cement, white cement, etc. Suitable applications of the roughened microparticles as reinforcing material are, for example, in engineered cementitious composites, spray concrete, engineered geopolymer concrete, or repair mortar.

The roughened microparticles can also be used to reinforce polymers, such as polyurethanes, epoxy resins, polyesters, polyolefins, etc., in particular epoxy resins.

The roughened microparticles can further be used to reinforce ceramics such as carbon, silicon carbide, alumina, mullite, or metals, such as aluminum, magnesium, titanium, cobalt and their alloys.

The reinforced composite materials can be prepared by incorporating the roughened microparticles in a conventional manner, for example by suitable mixing devices. In case of cement as structural material the microparticles can be added to the cement powder or to the cement paste at any time of the preparation process of the paste. They can be added all at once or in parts. In case of polymeric composites, the roughened microparticles are added to the molten polymers. In case of epoxy composites, the roughened microparticles are added to the monomer and polymerization is carried out in the presence of the microparticles.

In general, the roughened microparticles are added in an amount of 0.5 to 20 % by volume, preferably 1 to 10 % by volume, based on the weight of the structural material to be reinforced.

The magnetized roughened microparticles are particularly suitable as reinforcement in polymers, preferably epoxy resins. They have the advantage that they can be aligned by a magnetic field as disclosed in WO 2011/120643 or Science 335 (2012) 199-204. This results in a remarkable improvement of the mechanical performance such as elastic modulus, fracture resistance and flexural strength.

The invention leads to an improved reinforcing material that can be used in multiple applications. It can be used in any technological field and with matrices of different chemical nature, such as cement, polymers, ceramics or metals.

The following examples illustrate the invention without limiting it.

Example 1: Synthesis of roughened microparticles by electrostatic adsorption

**Materials**

The reinforcing elements used for the production of the composites are alumina platelets having having the parameters as given in table I (Alusion AL 5-10, Antaria, Australia). Modification of the surface of the platelets is performed using silica spheres having mean diameters of 100 nm and 250 nm provided as a powder (AngstromSphere Silica Microspheres, Fiber Optic Center Inc., USA).

Table I. Properties of the alumina platelets.

| Diameter | Thickness | Aspect Ratio | Density | Surface Area |
|----------|-----------|--------------|---------|--------------|
| 7.5 $\mu$m | 200 nm | 37.5 | 3.98 g/ml | 1.7 m$^2$/g |

**Methods**

The artificial roughening of the platelets' surface is achieved by electrostatic adsorption of the silica nanospheres. The different surface charge of alumina (IEP ≈ 9) and silica (IEP ≈ 2) in water was exploited as a driving force for the adsorption.

Platelets are prepared with 1% and 10% silica coverage, using both the 100 nm and 250 nm silica nanospheres (Table II). The amount of silica needed to obtain the desired coverage is evaluated by calculating the number of spheres needed for covering the surface of a platelet (diameter ≈ 7.5 $\mu$m) with a complete monolayer of silica nanoparticles.

The silica particles are first suspended in distilled water and then sonicated for 10 minutes at 80% intensity, with pulses of 3 s alternated with 5 s pauses. After the sonication, the silica suspension is poured into a 500 ml Erlenmeyer flask containing a previously prepared suspension of alumina platelets; the flask is then stirred for 48 hours in order to complete the adsorption. After mixing, the platelets are collected using a Büchner funnel, rinsed with ethanol, and dried in an oven at 60°C for 2 hours. The platelets are then collected in an alumina crucible before sintering.

Table II. Amounts of materials used in a typical experiment to obtain the desired surface modification.

| 100 nm $SiO_2$ 1% coverage | 10 g $Al_2O_3$ platelets in 470 ml distilled water 0.035 g $SiO_2$ spheres in 30 ml distilled water |
|---|---|
| 100 nm $SiO_2$ 10% coverage | 10 g $Al_2O_3$ platelets in 470 ml distilled water 0.350 g $SiO_2$ spheres in 30 ml distilled water |
| 250 nm $SiO_2$ 1% coverage | 10 g $Al_2O_3$ platelets in 470 ml distilled water 0.088 g $SiO_2$ spheres in 30 ml distilled water |
| 250 nm $SiO_2$ 10% coverage | 10 g $Al_2O_3$ platelets in 470 ml distilled water 0.880 g $SiO_2$ spheres in 30 ml distilled water |

Sintering is performed in order to enhance the adhesion of the silica nanospheres on the platelets' surface. This process is carried out in a two-step procedure: the first step is required to remove the residual organics, and is the same for 100 nm and 250 nm silica nanospheres; in the second step, the temperatures are selected according to the dimension of the silica nanospheres, i.e. the larger the particles, the higher the temperature. The heating steps are detailed in Table III.

Table III. Sintering procedure for the silica-covered platelets.

| 100 nm $SiO_2$ coating | heat to 400°C within 220 min rapidly heat to 1050°C maintain 1050°C for 4 hours |
|---|---|
| 250 nm $SiO_2$ coating | heat to 400°C within 220 min rapidly heat to 1200°C maintain 1200°C for 4 hours |

After sintering, the platelets are again suspended in 500 ml water: they are first sonicated for 30 min and then filtered using a sieve with 20 $\mu$m wide pore size in order to exclude any agglomerates that could have formed during sintering. Finally, they are collected using a Büchner funnel and dried at 120°C for 2 hours.

Detailed description of the preparation process:

A suspension of 0.264 g $SiO_2$ microspheres (250 nm) in 30 ml distilled water was sonicated for 10 min. (3s pulse, 52 pause, 80% intensity) to disperse silica spheres and avoid agglomeration. Subsequently, the suspension was added to a second suspension of 10 g $Al_2O_3$ platelets in 470 ml distilled water and stirred with a magnetic stirring bar in a 500 ml Erlenmeyer for 2 days to let the silica spheres adsorb on the surface of the alumina platelets at a pH of 7. The coated platelets were then collected by filtering and rinsed with approximately 20 ml Ethanol. After drying for 2h at 60°C the platelets were filled into an alumina crucible for sintering. The temperature was first increased from room temperature to to 400 °C within 220 min (heating rate of 1.7°C/min) to remove any residual organics. Then, the platelets were subjected to heating from 400 °C to 1200°C and kept at 1200°C for 4h. Any large agglomerates were broken up in a mortar. The ground platelets were then dispersed in about 500 ml of distilled water, allowed to sediment and the supernatant water was removed. Finally, the platelets were dried for 2h at 120°C.

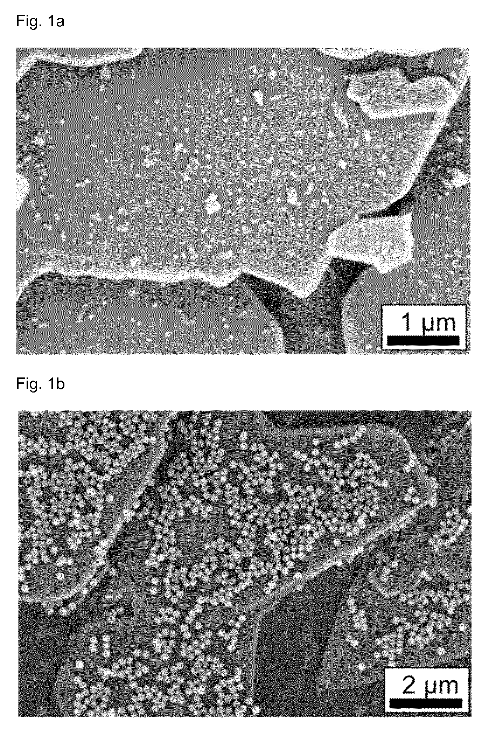

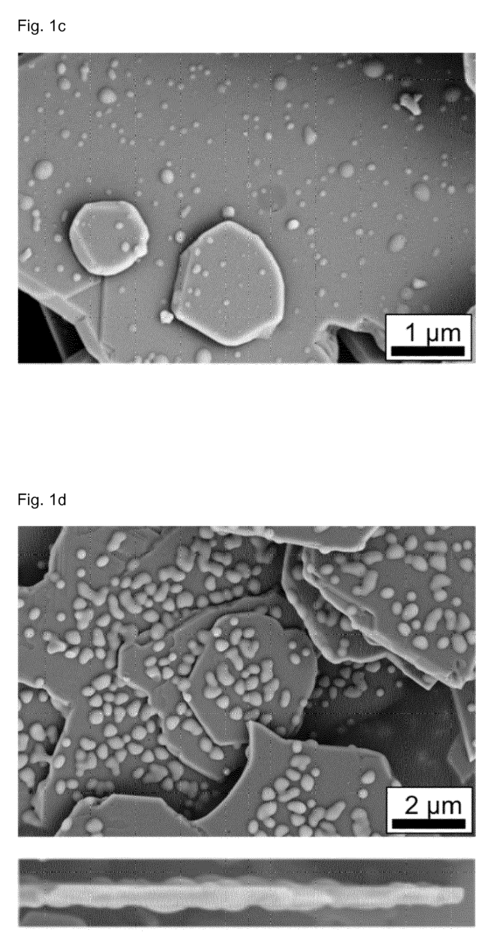

Figure 1 illustrates the morphology of the alumina platelets modified with 100 nm silica particles and a nominal surface coverage of 1% (figure 1a, c) and 250 nm silica particles and a nominal surface coverage of 10% (figure 1b, d) after electrostatic adsorption (figure 1 a and 1 b) and after sintering (figure 1c and 1d). The side view shows the amplitude of the sintered silica particles compared to the thickness of a bare alumina platelet with a thickness of about 200 nm.

Preparation of cement based composites

Commercially available Portland white cement (Holcim, Switzerland) was used as matrix for the composites. As reinforcing phase, bare alumina platelets, roughened microplatelets of the invention, and platelets that were coated with silica by the sol-gel process (Stoeber method; Langmuir 19, 6693-6700) were used. Therefore, four different classes of samples were prepared from: pure white cement; white cement and bare alumina platelets; white cement and roughened microplatelets of the invention; and white cement and silica coated platelets. As the volume fraction of water in the mixtures has been kept constant. A weight-based water-to-cement ratio of 0.60 has been adopted in the pure cement system whereas a based water-to-cement ratio of 0.66 has been adopted in the platelet reinforced systems. In each case 7 g of platelets were used for 50 g cement and 33 g water.

Mixing of the platelets with the cement paste was carried out in several steps to ensure a uniform dispersion and avoid platelet agglomeration. First, the platelets were dispersed in distilled waterby stirring and then white cement was added under manual stirring. Any air bubbles were removed by degassing in a vacuum chamber at 10 mbar for about 5 min. the cementitious composites were cast into a silicone rubber mold. Finally, the obtained samples were stored for 1 day in a humidity chamber at 25°C and 95% relative humidity before being demolded and soaked in a saturated solution of calcium hydroxide until the day of testing.

Mechanical testing

Three different mechanical tests were performed to prove the enhancement in the mechanical properties when using the roughened microparticles of the invention. Bars with dimensions of 6x4.5x70 mm were prepared for the three-point bending tests whereas cylindrical samples with 5mm diameter and a length of 10mm were prepared for compression tests. For the fracture toughness tests, single-edge notch bend specimens with dimensions of about 5x10x45 mm (in agreement with ASTM standard E-1820, 2011) were prepared.

A tensile tester (Instron 4411, Instron, USA) equipped with a 500N load cell was used to perform the three-point bending test. A 60 mm support span and a loading rate of 2mm/min were adopted. Flexural stress-strain curves were obtained by converting the load displacement data. Compression tests were carried out with a Zwick Z020 (Zwick GmbH, Germany) testing machine with a 2kN load cell. A 15N preload and a 2mm/min testing speed were set for each test. In the fracture toughness tests, the samples were mounted on a three-point bending setup (40 mm span) equipped with an extension gauge. $K_{IC}$ values for single-edge notched three-point bend specimens are determined as defined by the ASTM E-1820 standard. The experiments were carried out with an Instron 8562 (Instron, USA) testing machine equipped with a $\pm$1mm range displacement gauge and a 1 kN load cell in displacement control and at a rate of 0.02 mm/min until the sample fracture is recorded in the force-displacement plot.

The open porosity of the samples was determined and then correlated to the flexural mechanical properties of the tested systems. Pure white cement with water-to-cement ratios of 0.50, 0.55, 0.60, 0.65 and 0.70 was also tested to provide the relationship between water content and porosity for pure white cement.

Test results

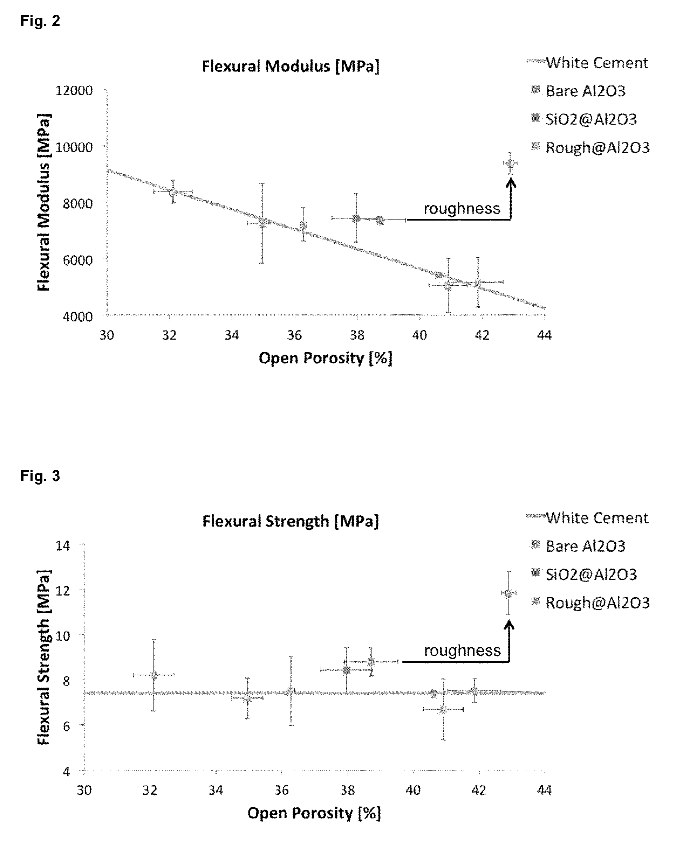

The flexural modulus and flexural strength obtained from the bending tests at 7 days after mixing are reported in figures 2 and 3 as a function of the open porosity of the samples. An average flexural modulus of 7.37 $\pm$ 0.04 GPa was calculated for the cementitious composite with randomly oriented bare platelets. While no significant increase of the flexural modulus was obtained by coating the surface of the platelets with a uniform silica layer (silica coated platelets), an increase of 2 GPa was achieved for composites the microparticles of the invention resulting in a flexural modulus of 9.38 $\pm$ 0.39 GPa. Surprisingly, the microparticles of the invention also increased the flexural strength of the cementitious composites by about 35% as compared to composites reinforced with bare platelets.

In Figures 2 and 3, the light orange line represents the best fit of the white cement data obtained from samples at water-to-cement ratios of 0.50, 0.55, 0.60, 0.65 and 0.70 (represented in the figures as light orange squares). The dark orange square placed on the white cement baseline represents the estimated porosity of the white cement sample with the same water-to-cement ratio of the tested composites, i.e. 0.66. Results are presented as the mean value and standard deviation of the respective mechanical property and the porosity for the different samples.

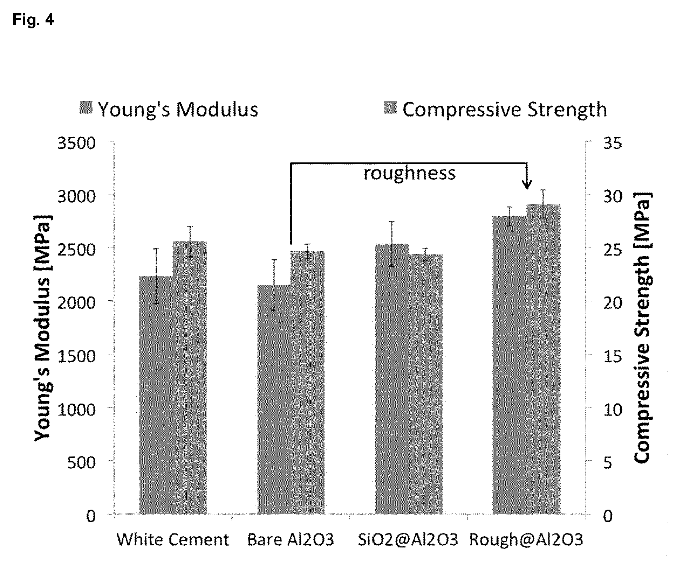

Figure 4 shows absolute values of the Young modulus and compressive strength for composites with randomly oriented bare platelets of 2.16 $\pm$ 0.24 GPa and 24.66 $\pm$ 0.64 MPa which is close to the values for pure white cement. For composites with silica coated platelets no significant improvement of the compressive strength was obtained with respect to pure white cement while an increase of 17% in the Young's modulus was found. Composites with the microparticles of the invention increased the compressive strength by 2.79 $\pm$ 0.09 GPa and the Young modulus by 29.10 $\pm$ 1.33MPa.

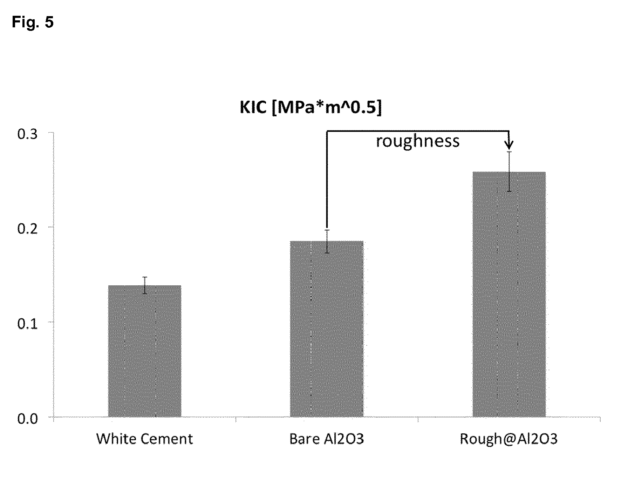

Experiments concerning the fracture mechanics allowed the evaluation of the $K_{IC}$ value for the tested systems. The $K_{IC}$ value relates to the energy required to initiate a crack in a material which does not exhibit an extended ductile behavior. The results are shown in figure 5 which demonstrates an increase of the $K_{IC}$ value from 0.14 $\pm$ 0.01 MPa $\cdot$ $m^{0.5}$ for pure white cement to 0.18 $\pm$ 0.01 MPa $\cdot$ $m^{0.5}$ when bare platelets are used. Use of the microparticles of the invention surprisingly increases the $K_{IC}$ value 0.26 $\pm$ 0.02 MPa $\cdot$ $m^{0.5}$ which means a 40 % increase with respect to the use of bare platelets.

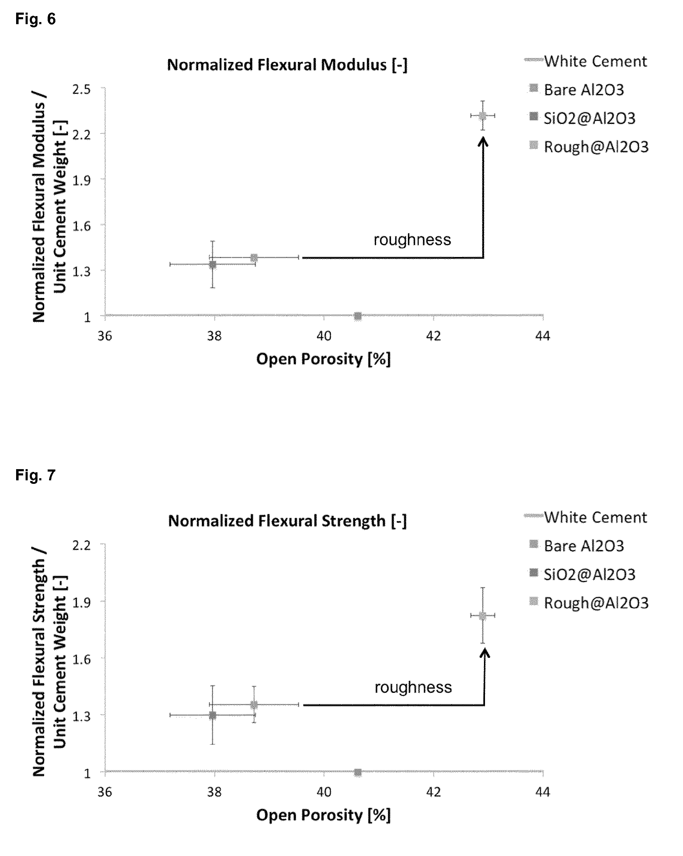

In order to quantify the effective improvement of platelet reinforced white cement, normalized data of the flexural modulus and flexural strength are shown in figure 6. For the respective mechanical property the normalizing factor is the value of the mechanical property at the same open porosity value. Further, the reduction of the amount of cement in the composites with respect to pure white cement is considered in the normalization. In this representation the distance between the baseline and the points represents the improvement in the performance of the composites.

The results show that the cement composites reinforced with the microparticles of the invention exhibit improved mechanical properties. Table IV summarizes the technical benefits of the invention.

Table IV

| | Pure matrix | Non-roughened platelets | Roughened platelets |
|---|---|---|---|
| crack deflection | ☐ | ☐ | ☐ |
| ligament bridging the faces of developing cracks | ☐ | ☐ | ☐ |
| geometrical interlocking between reinforcing elements and matrix | ☐ | ☐ | ☐ |
| spreading of the deformations over larger dimensions | ☐ | ☐ | ☐ |
| delocalization of the microstructural damage | ☐ | ☐ | ☐ |

Example 2: Synthesis of roughened microparticles via silane chemistry

**Materials**

Alumina platelets with diameter of 7.5 $\mu$m and thickness of 200 nm (Alusion AL 5-10, Antaria, Australia) are used as reinforcing building blocks. Modification of the surface of the platelets is performed using polystyrene (PS) nanospheres having a diameter of 300 nm (Microspheres-Nanospheres, USA). polyvinylpyrrolidone (PVP360, Mw =360,000 g/mol, Sigma-Aldrich, Switzerland), 3-aminopropyltriethoxysilane (APTES, 98%, Sigma-Aldrich, Switzerland), N,N-dimethylformamide (DMF, Sigma-Aldrich, Switzerland), tetraethylorthosilicat (TEOS, VWR International, Germany), ammonium hydroxide 25 vol% (Sigma-Aldrich, Switzerland), ethanol (ETOH, Sigma-Aldrich, Switzerland), N,N'-dicyclohexylcarbodiimide (DCC, Sigma-Aldrich, Switzerland), 4-dimethylaminopyridine (DMAP, Sigma-Aldrich, Switzerland), Toluene (>99.7 %, Sigma-Aldrich, Switzerland) are of technical grade, unless otherwise stated, and are used as received.

**Methods**

The different surface modifications carried out on the surface of the platelets to obtain chemical bonding between the alumina platelets and the PS nanospheres are described below. The modifications consist in the PVP coating, the silica coating, and the silane chemistry route to create an artificial roughness on the alumina platelets' surface.

PVP coating of alumina platelets

As previously reported by Libanori et al., Composite Science and Technology, 72(3):435-445, 2012, 4.375 g of the non-ionic, amphiphilic polymer polyvinylpyrrolidone PVP360 is dissolved in 800 mL of deionized water at room temperature. 5 g of alumina platelets dispersed in 200 mL of deionized water are then added to the water-PVP360 solution. The system is vigorously stirred for 24 h at room temperature. The reaction mixture is then filtered, washed with deionized water and dried in an oven at 60 °C for at least 2h.

PVP coated alumina platelets are referred to as PVP@Al$_2$O$_3$.

SiO$_2$ coating of PVP-stabilized alumina platelets

The surface modification of alumina platelets with silica is performed by a modified Stöber method described by Graf et al., Langmuir, 19(17):6693-6700, 2003, and Libanori et al., see above.

Alumina platelets are first functionalized with PVP360 and subsequently transferred to an ammonia/ethanol solution, where the silica coating is formed by slowly adding tetraethylorthosilicate (TEOS) with a syringe pump at specific flow rates to control the extent of secondary precipitation of SiO$_2$ particles. In a typical synthesis, 10 g of PVP@Al$_2$O$_3$ platelets are suspended in 880 mL of an ammonia/ethanol solution with an ammonia concentration of 0.56 mol/L. The silica-coating step is then performed through the controlled addition of 40 mL of a 8.3 vol% TEOS solution in EtOH at a flow rate of 800 $\mu$L/h. With these conditions the overall reaction lasts about 50 hours. The silica coated alumina platelets are then filtered, washed with 800 mL EtOH and dried overnight in the vacuum oven at 80 °C.

Alumina platelets coated with silica are referred to as $SiO_2@Al_2O_3$.

Generation of artificial roughness via silane chemistry

Silane chemistry can be carried out on the silica-coated alumina platelets. Ideally, a monolayer of the silane is stably adsorbed on the reactive silica surface with the primary amino group pointing away from the surface. The silanization is based on APTES.

10 g of $SiO_2@Al_2O_3$ platelets are dispersed in 125 mL of toluene. Separately, 30 $\mu$L of APTES are mixed with 4 $\mu$L of butylamine and are then added to the platelet suspension. The amount of ATPES is calculated knowing the specific surface area of $SiO_2@Al_2O_3$ platelets and aiming a theoretical APTES surface coverage of 6.91 $\mu$mol/m$^2$. This value is the maximal grafting density achieved by Cuoq et al., Applied Surface Science, 266(0):155-160, 2013, for the hydrophobic adsorption of APTES on silica. The mixture is sonicated for 5 min. The reaction is carried out in a sealed flask for 24 h at 90 °C under vigorous stirring. The mixture is then cooled down, sonicated for 5 min at and centrifuged for 10 min at 4000 rpm. After the removal of the organic supernatant, the solid deposit is redispersed in ethanol, sonicated again for 2 min in order to remove the weakly bound silane molecules, centrifuged and lastly dried at 80 °C for 2h. The so functionalized platelets are called APTES-$SiO_2@Al_2O_3$.

The PS nanoparticles can now chemisorb on the amino functionalized surface depending on the adsorption conditions. In order to produce chemisorbed PS roughness, a condensation reaction between amino groups of the APTES grafted on the surface and carboxylic groups present on the PS surface have to take place. The reaction is catalyzed by DCC and DMAP. The result of the condensation reaction is the formation of a stable, planar amide bond between the APTES feet and the COOH-functionalized PS beads.

The roughness reaction for APTES-$SiO_2@Al_2O_3$ platelets with 10% PS surface coverage is now described. First of all, the PS-suspension is sonicated for 5 min (1 s on, 1s off). 20.67 mL PS-suspension (2,07 wt%) and 25 ml DMF are transferred to a 250 mL round bottom flask. The volume DMF is selected such that the particle dispersion after the solvent exchange process will be 2 vol%. Solvent exchange takes place in the rotor evaporator. For 30 min the water is evaporated at 60°C with 72 mbar. The mixture is then transferred to a 1L flask to improve the evaporation of water. The exchange is carried out for further 30 min at 60°C under a pressure of 55 mbar. After the second evaporation step, the mixture volume is lower than the initial DMF volume, proving that a minimal part of DMF evaporated but more important all the water is removed. Now, 10 g of APTES-$SiO_2@Al_2O_3$ platelets, 34.3 mg DCC, 440 mL of a 8.23 wt% DMAP-solution in DMF are added. Under continuous stirring, the reaction takes place for 4 hours. Afterwards, the powder is filtered, washed with 100 mL DMF, 100 mL distilled water and 100 mL EtOH and then dried for 2 hour at 60°C. Finally, the sintering step is carried out in an oven for 15 min at 120°C.

The roughened alumina platelets modified using the silica route are called APTES-$SiO_2@Al_2O_3$-PSCOOH.

Example 3: Preparation of Epoxy composites

Materials

The alumina platelets used for the production of the composite (Alusion AL 5-10, Antaria, Australia) show an average diameter of 7.5 $\mu$m and a thickness of 300 nm. Modification of the surface of the platelets is performed as described in example 1 using $SiO_2$ spheres (AngstromSphere Silica Microspheres, Fiber Optic Center Inc., USA) having diameters of 100 nm. Magnetization of the platelets is executed using magnetite ($Fe_3O_4$) nanoparticles stabilized with cationic or anionic surfactants, depending on the surface charge of the platelets (Ferrofluid EMG 605 and EMG 705, Ferrotec, USA). The epoxy resin used is provided by Sika (Sikadur 300, Components A and B) and is cured by heating.

Methods

Magnetization of bare and $SiO_2$ coated alumina platelets

In order to be able to align the reinforcing platelets in the epoxy matrix, they are magnetized using magnetite nanoparticles. In this way, the platelets become highly responsive to an external magnetic field and it is possible to obtain a high degree of alignment in the reinforcing phase of the final composite (Erb, Libanori, et al., Science, 335 (2012) 199-204). Ferrofluid nanoparticles with cationic surfactant (EMG 605) are used for roughened platelets, as silica (negatively charged in water) dominates the surface charge; in contrast, the anionic Ferrofluid particles (EMG 705) is used when magnetizing as-received alumina platelets.

In a typical magnetization process of silica-roughened platelets, 10 g of platelets are thus suspended in 300 ml of distilled water, while 0.375 $\mu$l of Ferrofluid EMG 705 are diluted in 200 ml of distilled water in another flask. The suspension of Ferrofluid particles is then slowly added to that of the platelets and mixed for 48 hours on a magnetic stirrer. The batch of platelets is then filtered and rinsed using distilled water and ethanol. The filtered platelets are dried in an oven at 60°C for 2 hours, and then in a vacuum oven (50 mbar) at 150°C for 24 hours, in order to remove any water that might be still adsorbed on the surface.

Preparation of the epoxy composites

A 15% vol. of platelets is chosen to carry out the mechanical characterization. According to the desired volume fraction of platelets, the amounts of epoxy monomer (Sikadur 300-Component A) and of hardener (Sikadur 300 - Component B) are used such that the mass ratio A:B between the two components is 100:34.5. A typical batch of the composite material is prepared with the amounts of materials listed in Table V. In order to perform the calculations, the density of the resin is assumed to be 1.2 g/mL.

The preparation is carried out in a 50 mL round-bottom flask. Firstly, the monomer is weighed in the desired amount. Then, the platelets are added in three equal portions followed by mechanical stirring for 15 minutes at 2000 rpm to achieve a better dispersion. After that, the hardener is added and the mixture is manually stirred to avoid further incorporation of bubbles. In order to minimize the presence of processing defects, vacuum (10 mbar) in combination with ultrasound vibration in a water bath at 50-55°C are used to lower the viscosity of the system.

Table V. Typical amounts of materials used for the preparation of one sample of composite.

| Epoxy-Alumina composite, 15% vol. $Al_2O_3$ | | |
| --- | --- | --- |
| Epoxy monomer | Alumina platelets | Hardener |
| (Sikadur A) 10.50 g | 2.75 g + 2.75 g + 2.77 g | (Sikadur B) 3.62 g |

After the bubbles are successfully removed, the mixture is cast inside a Teflon mold. To align the platelets, the mold is fixed on a vibrating table set at a vibrating amplitude of 3 mm at 50 Hz for 10 minutes while a permanent magnet (approx. 200-300 mT field strength) is rotated over the sample at a frequency of approx. 200 rpm: this leads to a biaxial alignment of the platelets (Erb, Segmehl, et al., Soft Matter, 8 (2012) 7604-7609). Then, the sample is cured in an oven for 4 hours at 60°C. In order to maintain the platelet alignment while the composite hardens in the oven, a setup providing an oscillating field is prepared using three solenoids. Two solenoids are connected to a controller that generated 7 V of voltage with a frequency on 3 Hz, which applies an alternating horizontal magnetic field along a certain axis of the sample. The third solenoid provides a vertical field to align the main axis of the platelets in the out-of-plane. Finally, the solenoids and the magnet are removed and the temperature of the oven is raised to 125°C for 2 hours to ensure complete curing of the sample.

Three point bending tests

Three point bending tests are performed on composites containing aligned, bare platelets and composites containing aligned, roughened platelets. In both cases, the platelets are aligned perpendicularly to the loading direction, in the plane where the compressive and tensile stresses are developed.

Samples were cut in bars 3 mm x 5 mm x 45 mm by using a wire saw with a 0.3 mm diameter. All samples were then polished manually up to the 4000 wet grinding paper. A tensile tester (Instron 4411, Instron, USA) equipped with a 500 N load cell mm is used for the tests. Bending tests are performed with a 30 mm span and at a displacement rate of 1 mm/min.

The load/displacement data were analyzed and converted in stress/strain data using the following formulas:

$$\varepsilon = \frac{6 \cdot d \cdot B}{S^2} \qquad \sigma = \frac{3 \cdot P \cdot S}{2 \cdot W \cdot B^2} \qquad (1)$$

Where $\varepsilon$ and $\sigma$ are respectively strain and stress [MPa], d the displacement [mm], S the span [mm], P the load [N], $B$ the depth [mm], $W$ the width [mm] of the sample.

Results

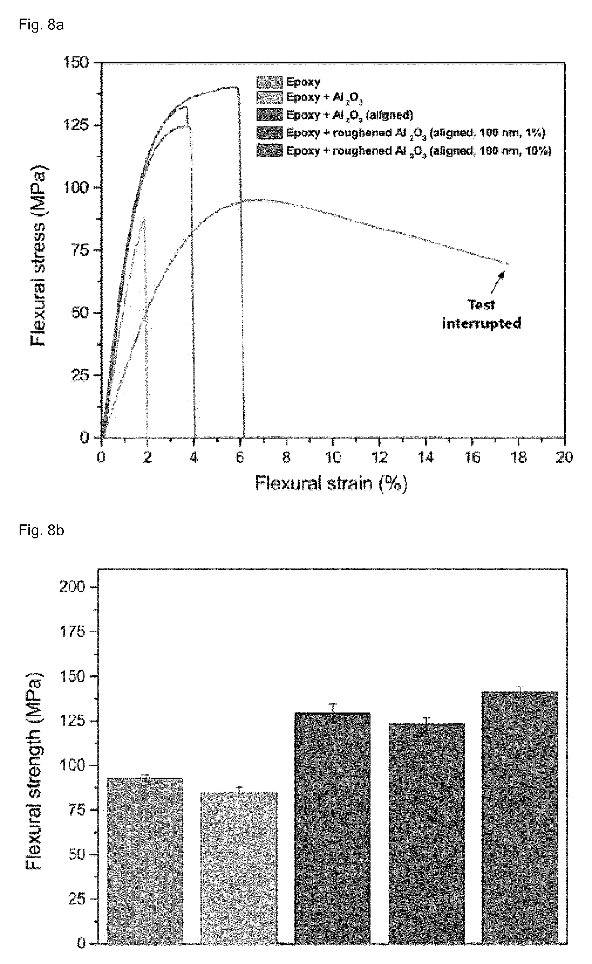

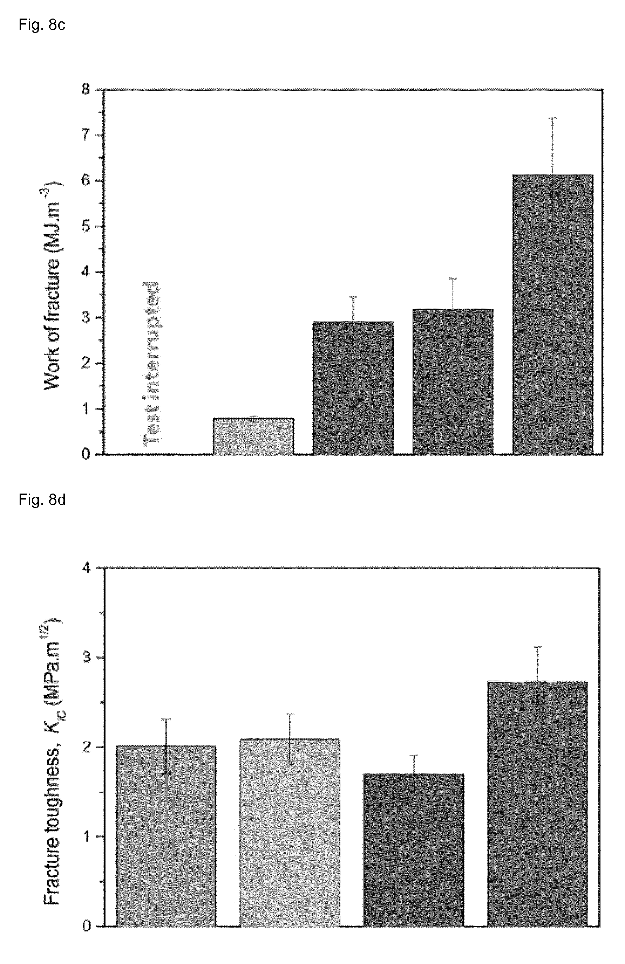

The stress-strain curves obtained from the bending tests are reported in Figure 8a. The plot shows how the epoxy resin chosen as a matrix is able to undergo significant deformations without exhibiting failure. By adding 15% vol of aligned alumina platelets, the elastic modulus and flexural strength are increased by about 200% and 20-25%, respectively. Remarkably, composites containing roughened platelets with 10% nominal surface coverage exhibit 2-fold increase in strain at rupture without any reduction in elastic modulus or flexural strength (Figure 8b) when compared to the composite reinforced with non-roughened alumina platelets. This leads to a two-fold increase in the dissipated energy (Figure 8c) and in an improvement of the fracture resistance (Figure 8d).

The remarkable improvement in the mechanical performances is due to the fact that the asperities present on the surface supposedly increase the pullout resistance of the platelets, which leads a larger deformation of the polymer material located around the matrix-platelet interface. Thus, these results indicate that roughening the surface of reinforcing platelets can be an effective way for increasing the damage tolerance of the composite while maintaining its strength and stiffness.

**Claims**

1. A process for forming roughened micron size anisotropic platelets which comprises

   a1) contacting micron size inorganic oxide platelets with inorganic nanoparticles other than magnetic and/or superparamagnetic nanoparticles or with organic polymeric nanoparticles, which nanoparticles have a melting or sintering temperature lower than the sintering temperature of the micron size platelets, in aqueous suspension at a pH that is between the isoelectric point of the nanoparticles and the isoelectric point of the micron size platelets to obtain modified micron size inorganic oxide platelets having nanoparticles adsorbed on the surface due to electrostatic attraction or

   a2) contacting micron size inorganic oxide platelets with organic polymeric nanoparticles and adsorbing said nanoparticles on said inorganic micron size platelets by chemisorption to obtain modified micron size platelets having organic polymeric nanoparticles attached to the surface due to chemisorption;

   b) optionally, isolating the obtained modified micron-size platelets; and

   c) optionally, heating the isolated modified platelets to sinter the nanoparticles on the surface of the micron-size platelets.

2. The process of claim 1, wherein the micron-size inorganic oxide platelets are selected from alumina, gibbsite, clay, talc, mica, glass, silicon carbide, graphene, graphene oxide, graphite, or aluminum boride platelets and in particular from alumina, zirconium dioxide and mica platelets, with alumina platelets being most preferred.

3. The process of claim 1 or 2, wherein the micron-size inorganic oxide platelets have a thickness in the range from about 1 nm to about 10 $\mu$m, an average (in plane) diameter in the range from about 0.5 $\mu$m to about 100 $\mu$m, and an aspect ratio in the range from about 5 to about 100.

4. The process of any one of the preceding claims, wherein the nanoparticles have a diameter in the range from about 5 nm to about 1 $\mu$m.

5. The process of any one of the preceding claims, wherein the nanoparticles are silicon dioxide particles.

6. The process of any one of the preceding claims, wherein in step a2) the organic polymeric nanoparticles are bonded to the surface of the micron size inorganic oxide platelets by chemisorption through functional groups present on the nanoparticles and the micron-size inorganic oxide platelets.

7. The process of any one of claims 1 to 4 or 6, wherein the organic polymeric nanoparticles are polystyrene particles functionalized with carboxyl groups.

8. The process of claim 7, wherein the polystyrene particles functionalized with carboxyl groups are attached to the micron size inorganic oxide platelets through an amide bond with 3-aminopropyl-triethoxysilane.

9. The process of claim 7, wherein the 3-aminopropyl-triethoxysilane is attached to micron size inorganic oxide platelets through a silicon dioxide interlayer that is generated by the sol gel method.

10. The process of any one of the preceding claims, wherein the weight ratio of micron size inorganic oxide platelets to nanoparticles is in the range from 10 to 100.

11. The process of any one of claims 1 to 5, wherein in step (c) the micron-sized platelets modified with inorganic nanoparticles are subjected to a heat treatment sufficient to promote sintering but not melting of the nanoparticles.

12. The process of claim 11, wherein the heat treatment is carried out at a temperature in the range from about 300 °C to about 1400°C and for a duration in the range from about 1 to about 12 hours.

13. The process of claim 5, wherein the roughened micron size anisotropic platelets are additionally provided with magnetic or paramagnetic particles after step a1), a2), b) or c).

14. Roughened platelets obtainable according to a process of any one of claims 1 to 13.

15. Reinforced composite materials comprising the roughened platelets of claim 14.

16. The reinforced composite material of claim 15 in the form of a cement, ceramic, metal or polymer composite, preferably a polymer composite on the basis of an epoxy resin.

17. The use of the roughened platelets of claim 14 as reinforcement in structural materials or polymer materials.

Fig. 1a

Fig. 1b

Fig. 1c

Fig. 1d

**Fig. 2**

**Fig. 3**

**Fig. 4**

Fig. 5

**Fig. 6**

Normalized Flexural Modulus [-]

**Fig. 7**

Normalized Flexural Strength [-]

Fig. 8a

Fig. 8b

EP 3 070 071 A1

Fig. 8c

Fig. 8d

Europäisches
Patentamt

European
Patent Office

Office européen
des brevets

## EUROPEAN SEARCH REPORT

Application Number

EP 15 15 9247

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 336 301 A (SHAW ROBERT B) 22 June 1982 (1982-06-22) | 14-17 | INV. C04B35/628 |
| A | * whole document, but see in particular the illustrative embodiments, figures, table 3 and col. 4, 1.27-31 * | 1-13 | C04B14/02 C04B14/20 C04B35/80 C09C1/40 |
| X | WO 02/056846 A1 (COLOR ACCESS INC [US]) 25 July 2002 (2002-07-25) * page 4, line 32 - page 5, line 4 * | 14 | C08K9/02 |
| X | "Highly Functional Inorganic Particles Highly Functional Inorganic Particles", , 8 December 2011 (2011-12-08), XP55193979, Retrieved from the Internet: URL:http://kowa.eu/cosmetics/download/Func tionalParticles.pdf [retrieved on 2015-06-05] * whole document * | 14 | |
| X | US 4 026 721 A (KURRLE FREDERICK L) 31 May 1977 (1977-05-31) * examples and figures * | 14 | |
| X | WO 2007/011432 A1 (SENSIENT COLORS INC [US]; GUTKOWSKI GLENN A [US]; THYS WILLIAM F [US]) 25 January 2007 (2007-01-25) * figures 1 & 2, paragraph 0030 * | 14 | |
| X | JP H09 132514 A (CATALYSTS & CHEM IND CO) 20 May 1997 (1997-05-20) * abstract & Japanese full text * | 14 | |

TECHNICAL FIELDS
SEARCHED (IPC)

C04B
C09C
C08K

-/--

The present search report has been drawn up for all claims

| Place of search | Date of completion of the search | Examiner |
|---|---|---|
| Munich | 9 June 2015 | Munro, Brian |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

Europäisches
Patentamt

European
Patent Office

Office européen
des brevets

## EUROPEAN SEARCH REPORT

Application Number

EP 15 15 9247

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONG, QIUSHENG ET AL.: "Sericite/PS composite particles prepared by emulsion polymerisation assisted by ultrasonic radiation",<br>GAOFENZI CAILIO KEXUE YU GONGCHENG,<br>vol. 28, no. 4, April 2012 (2012-04),<br>pages 137-139-143, XP009184713,<br>* see English abstract on p.143 & figure 3 * | 1,14 | |
| A | SHUANG XIA ET AL: "Nanoasperity: Structure Origin of Nacre-Inspired Nanocomposites",<br>ACS NANO,<br>vol. 9, no. 2,<br>24 February 2015 (2015-02-24), pages 2167-2172, XP55194117,<br>ISSN: 1936-0851, DOI: 10.1021/acsnano.5b00119<br>* the whole document * | 1-17 | |
| A | US 6 723 162 B1 (CHEYREZY MARCEL [FR] ET AL) 20 April 2004 (2004-04-20)<br>* col.8, 1.8-13; col. 9, 1.20-45; claims 1, 12 & 17 * | 1-17 | TECHNICAL FIELDS SEARCHED (IPC) |
| A | BE 380 793 A (GEORGES WALTER)<br>31 July 1931 (1931-07-31)<br>* claims * | 1-17 | |
| A | EP 2 371 522 A1 (ETH ZUERICH [CH])<br>5 October 2011 (2011-10-05)<br>* the whole document * | 1-17 | |

The present search report has been drawn up for all claims

| Place of search | Date of completion of the search | Examiner |
|---|---|---|
| Munich | 9 June 2015 | Munro, Brian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

**EP 3 070 071 A1**

## ANNEX TO THE EUROPEAN SEARCH REPORT
## ON EUROPEAN PATENT APPLICATION NO.

EP 15 15 9247

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2015

| Patent document cited in search report | | Publication date | Patent family member(s) | | Publication date |
|---|---|---|---|---|---|
| US 4336301 | A | 22-06-1982 | NONE | | |
| WO 02056846 | A1 | 25-07-2002 | AU | 2002234127 B2 | 29-06-2006 |
| | | | CA | 2433337 A1 | 25-07-2002 |
| | | | EP | 1365730 A1 | 03-12-2003 |
| | | | JP | 2004526694 A | 02-09-2004 |
| | | | US | 2002141957 A1 | 03-10-2002 |
| | | | WO | 02056846 A1 | 25-07-2002 |
| US 4026721 | A | 31-05-1977 | DE | 2711910 A1 | 22-09-1977 |
| | | | ES | 456973 A1 | 01-10-1978 |
| | | | FR | 2344604 A1 | 14-10-1977 |
| | | | GB | 1564867 A | 16-04-1980 |
| | | | JP | S547296 B2 | 05-04-1979 |
| | | | JP | S52115831 A | 28-09-1977 |
| | | | US | 4026721 A | 31-05-1977 |
| WO 2007011432 | A1 | 25-01-2007 | US | 2007020208 A1 | 25-01-2007 |
| | | | WO | 2007011432 A1 | 25-01-2007 |
| JP H09132514 | A | 20-05-1997 | NONE | | |
| US 6723162 | B1 | 20-04-2004 | AR | 016484 A1 | 04-07-2001 |
| | | | AT | 249399 T | 15-09-2003 |
| | | | AU | 748678 B2 | 13-06-2002 |
| | | | AU | 3611899 A | 29-11-1999 |
| | | | BR | 9910471 A | 09-01-2001 |
| | | | CA | 2332637 A1 | 18-11-1999 |
| | | | CN | 1305441 A | 25-07-2001 |
| | | | CZ | 20004200 A3 | 13-03-2002 |
| | | | DE | 69911202 D1 | 16-10-2003 |
| | | | DE | 69911202 T2 | 17-06-2004 |
| | | | DK | 1080049 T3 | 19-01-2004 |
| | | | EP | 1080049 A1 | 07-03-2001 |
| | | | ES | 2205811 T3 | 01-05-2004 |
| | | | FR | 2778654 A1 | 19-11-1999 |
| | | | HK | 1037172 A1 | 09-11-2007 |
| | | | ID | 28741 A | 28-06-2001 |
| | | | JP | 4522981 B2 | 11-08-2010 |
| | | | JP | 5603538 B2 | 08-10-2014 |
| | | | JP | 2002514567 A | 21-05-2002 |
| | | | JP | 2007055895 A | 08-03-2007 |
| | | | JP | 2008133185 A | 12-06-2008 |
| | | | JP | 2014185079 A | 02-10-2014 |
| | | | KR | 20010071263 A | 28-07-2001 |
| | | | MX | 221807 B | 29-07-2004 |

EPO FORM P0459

For more details about this annex : see Official Journal of the European Patent Office, No. 12/82

**ANNEX TO THE EUROPEAN SEARCH REPORT**
**ON EUROPEAN PATENT APPLICATION NO.**                    EP 15 15 9247

This annex lists the patent family members relating to the patent documents cited in  the above-mentioned European search report.
The members are as contained in the European Patent Office EDP file on
The European Patent Office is in no way liable for these particulars which are merely given for the purpose of information.

09-06-2015

| Patent document cited in search report | | Publication date | Patent family member(s) | | Publication date |
|---|---|---|---|---|---|
| | | | NZ | 508716 A | 25-07-2003 |
| | | | PL | 344220 A1 | 08-10-2001 |
| | | | PT | 1080049 E | 27-02-2004 |
| | | | TH | 47555 A | 08-04-2010 |
| | | | TR | 200003314 T2 | 21-06-2001 |
| | | | TW | 568893 B | 01-01-2004 |
| | | | US | 6723162 B1 | 20-04-2004 |
| | | | WO | 9958468 A1 | 18-11-1999 |
| | | | ZA | 200006572 A | 13-11-2001 |
| BE 380793 | A | 31-07-1931 | NONE | | |
| EP 2371522 | A1 | 05-10-2011 | EP | 2371522 A1 | 05-10-2011 |
| | | | EP | 2552681 A2 | 06-02-2013 |
| | | | JP | 2013525137 A | 20-06-2013 |
| | | | US | 2013053471 A1 | 28-02-2013 |
| | | | WO | 2011120643 A2 | 06-10-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011120643 A
- WO 2014040704 A
- WO 2013011256 A1
- WO 2012049198 A1
- US 20110028308 A1
- US 20080305329 A1
- US 20080160286 A1
- EP 1939149 A2
- WO 2008034042 A2
- US 20070298172 A1
- US 20070269605 A1
- WO 2007015880 A2

**Non-patent literature cited in the description**

- **LIN et al.** *Journal of Colloid and Interface Science,* 2010, vol. 344, 272-278
- *Langmuir,* 2003, vol. 19, 6693-6700
- **HASHIMOTO et al.** *J. Am. Ceram. Soc.,* 2003, vol. 86 (11), 1959-1961
- **MUNCH et al.** *Science,* 2008, vol. 232, 1516-1520
- **BOUVILLE et al.** *Nature Materials,* 2014, vol. 13, 508-514
- **SHUKLA et al.** *Proceedings on the World Congress of Engineering 2011,* 06 July 2011, vol. III
- **XIA et al.** *ACS Nano,* 27 January 2015
- **HASHIMOTO et al.** *J. Mater. Res.,* 1999, vol. 14 (12), 4667-4672
- *Langmuir,* 2003, vol. 19 (17), 6693-6700
- *Composite Science and Technology,* 2012, vol. 72 (3), 435-445
- **W. STÖBER et al.** *J. Colloid Interface Sci.,* 1968, vol. 26 (1), 62-69
- **C. REESE et al.** *J. Colloid Interface Sci.,* 2002, vol. 248 (1), 41-46
- **LIBANORI et al.** *Composite Science and Technology,* 2012, vol. 72 (3), 435-445
- *Science,* 2012, vol. 335, 199-204
- **STOEBER.** *Langmuir,* vol. 19, 6693-6700
- **GRAF et al.** *Langmuir,* 2003, vol. 19 (17), 6693-6700
- **CUOQ et al.** *Applied Surface Science,* 2013, vol. 266 (0), 155-160
- **ERB, LIBANORI et al.** *Science,* 2012, vol. 335, 199-204
- **ERB, SEGMEHL et al.** *Soft Matter,* 2012, vol. 8, 7604-7609